# EUROPEAN PATENT SPECIFICATION

(11) **EP 2 096 020 B1**
(45) Date of publication and mention of the grant of the patent: **22.06.2011**
(21) Application number: 08102186.7
(22) Date of filing: 29.02.2008
(51) Int. Cl.: B62D 25/20, B62D 21/09, B62D 21/15

(54) **Vehicle body member**
Fahrzeugkarosserieteil
Elément de carrosserie de véhicule

(43) Date of publication of application: 02.09.2009
(73) Proprietor: Ford Global Technologies, LLC, Dearborn, MI 48126 (US)
(72) Inventor: Ljungquist, Henrik, 423 36 Torslanda (SE); Nedic, Stevan, 416 70 Göteborg (SE); Mjelde, Björn, 418 73 Göteborg (SE); Olsson, Ingvar, 430 93 Hälsö (SE)
(74) Representative: Olsson, Stefan

(56) References cited:
- WO-A-2007/088303
- JP-A- 8 133 131
- JP-A- 9 024 864

## Description

### TECHNICAL FIELD

The present invention relates to a vehicle body member for supporting a vehicle seat or a seat chassis and for resisting side impact collision forces, the vehicle body having a floor module with a centre tunnel and at least one sill.

### BACKGROUND ART

Modern standard passenger vehicles or cars have seats for 4 or 5 persons, 2 of them in the front the two front seats normally comprises two separate chairs that are connected to the vehicle body floor between an outer sill, left and right respectively, and a centre tunnel. Most chairs or seats are adjustably arranged, i.e. they can be adjusted both up and down, back and forth, and they are also tiltable. The means for this is a chair chassis, which is fixed to the very seat and to the vehicle body floor at certain points, most often two in the front and two in the back. Since the chair with its chassis is often manufactured somewhere else than at the car plant and unnecessary time consuming work must be avoided, it is important that the vehicle body, which is welded together at the plant, have fixing points for the chair chassis that are very accurately positioned to meet the fixing points of the chair chassis. A common way of meeting this demand is to weld brackets to the body floor at predetermined positions while at the same time having tools that keep the different brackets in well defined positions relative each other during the welding process. It is also known to have a seat front bracket that extends transverse to the longitudinal direction of the vehicle body between an outer sill and a centre tunnel, having fixing points for both the left and the right side of the chair chassis. It is further known to have two seat rear brackets positioned behind the front seat bracket, one positioned at the respective outer sill and the other at the centre tunnel. Two separate brackets give foot space for a rear seat passenger under the front seat. It is still known to have a single rear bracket, extending in a similar way to the front seat bracket transverse to the vehicle body direction between the outer sill and the centre tunnel. One simple way of making the seat brackets is by folding a piece of sheet metal to the desired form.

In modern cars there is also a large demand for crash safety. Since the rear bracket is positioned inside the vehicle body B-pillar, it can strengthen the body resistance to side impact collisions. For this reason, it is known to produce the rear brackets (left and right vehicle body side) by stamping a sheet metal to the desired form instead of folding a sheet metal piece, since a bracket of that type with less or smaller flutes has better and more controlled behaviour properties in a crash situation.

WO 2007/088303 discloses a seat part cross member for a motor vehicle comprises a beam fixed between two longitudinal rails of the vehicle or between one longitudinal rail and a transmission tunnel. It also comprises reinforcements fixed to the beam and able to transmit, to the vehicle body understructure, a load that is applied to a lateral end of the beam.

One problem to use a stamped bracket is that when considering crash resistance the wanted thickness of the sheet metal being used for the bracket contradicts the need for stampability. With modern car designs, especially for cars of the type SUV, the distance between the vehicle body floor and the fixing points of the vehicle chair chassis is higher than in older vehicles. This makes the stampability property demand for the sheet metal used in the brackets even higher and makes a design of a stamped bracket expensive and complicated, bearing in mind the need for thickness to meet the crash safety demand.

Another problem, thinking of crash forces and the use of the seat brackets for helping secure the passengers inside the vehicle, is that there is a need for foot space for the rear seat passengers underneath the front seats. Since the rear seat consoles are positioned inside the B-pillars (left and right) the consoles often must have a shape that allows rear seat passengers to put their feet under the front seat, where the bracket is positioned. This is a factor that the designer of the bracket must bear in mind and consider because such a shape does not help when it comes to design for withstanding forces in its longitudinal direction.

### DISCLOSURE OF THE INVENTION

The problems with prior art discussed above is solved by a vehicle body member having a combination of a seat or seat chassis supporting element and a vehicle body enforcing element, the elements both being elongated and extending transverse to the longitudinal direction of the vehicle body under the at least one seat between the centre tunnel and one of the side sills, whereby the enforcing element is arranged lengthwise inside the supporting element and is carried in a fixed position by the supporting element. This combination allows the designer to choose a suitably high design for the supporting element to meet highly positioned seat chassis without having to compromise with demands on crash properties while at the same time the enforcing element can be designed to meet the demands for a stiff vehicle body. The fixing of the enforcing element inside the supporting elements solves the problem of accuracy for the seat chassis fixing points since when making the vehicle body there is only one member that has to be accurately positioned. The material in the supporting element and the enforcing element can be chosen independently to meet suitable production methods and costs. Also the accuracy of the positions of the fixing points for the seat or seat chassis is secured by having the supporting element accurately positioned while the enforcing member does not interfere, since it is fixed to the supporting element.

In one advantageous embodiment of the invention the supporting element has a cross-section essentially in the shape of a trapezium, and that the enforcing element has a cross-section essentially in the shape of a trapezium whereby the outer dimensions of the enforcing element and the inner dimensions of the supporting element respectively are adapted for a spot-weldable contact when the enforcing element is in operable position on the inside of the supporting element.

In a further advantageous embodiment of the invention the enforcing element is lower than the supporting element allowing a free foot space for passengers to be defined above the enforcing element and below a top level defined by a top panel of the supporting element. This embodiment creates a comfortable foot space for rear seat passengers.

Further advantages will be evident from the description of the embodiment shown in the drawings and will also be defined in the following claim set.

### BRIEF DESCRIPTION OF THE DRAWINGS

The invention will in the following be described in connection with an example shown in the drawings on which
Fig 1 shows the position of a vehicle body member of the kind herein described when mounted on a vehicle floor module (the vehicle floor module shown in part only),
Fig. 2 shows a chair supporting element comprised in the vehicle body member,
Fig. 3 shows a vehicle body enforcing element comprised in the vehicle body member,
Fig. 4 shows how the supporting element and the enforcing element are put together,
Fig 5 shows in cross section the relative position between the supporting element and the enforcing element when combined and
Fig 6 shows schematically how the vehicle body member fits to the vehicle floor module.

### EMBODIMENT OF THE INVENTION

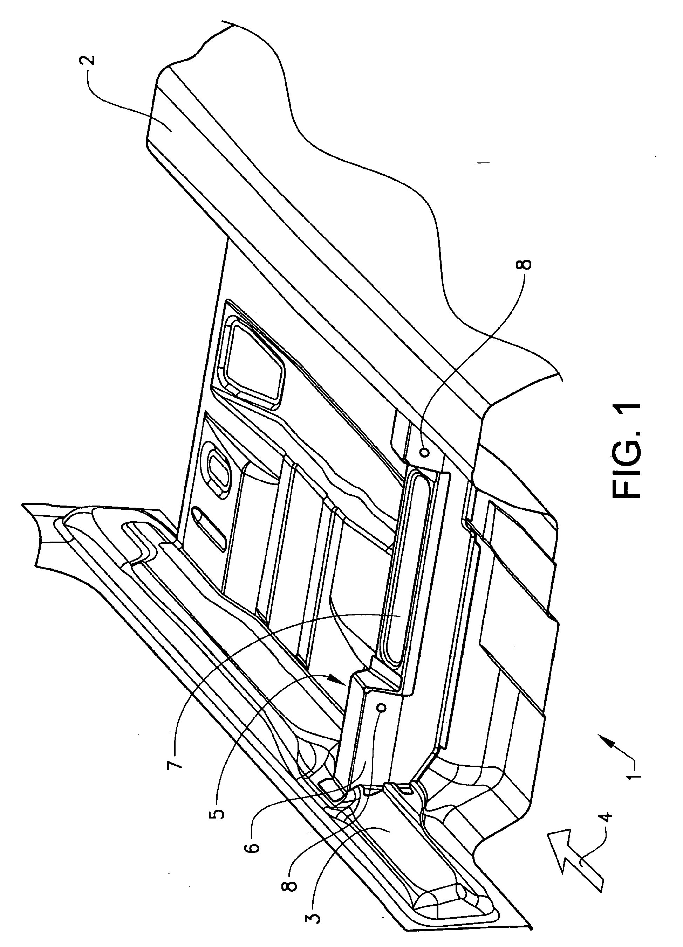

Partly shown in fig. 1 is a floor module 1 of a typical passenger vehicle. The floor module has a centre tunnel 2 and a left, inner sill 3, the forward direction of the vehicle being in the direction of the arrow 4. The floor module has a topography which is designed to meet various demands but this is not of particular interest here, and for this reason it is not discussed in more detail. What is of interest is an elongated body member 6, extending between the left, inner sill 3 and the centre tunnel 2 in a direction substantially transverse to the forward direction of the floor module. The body member comprises two elements, a seat or a seat chassis supporting element 6 and a vehicle body enforcing element 7, the latter situated inside the supporting element 6. The vehicle body member has fixing points 8, positioned in order to meet accurately with corresponding fixing points of a seat or a seat chassis (not shown). The enforcing element 7 is contained inside the supporting element 6 and spot-welded to it, while the supporting element in turn is spot-welded to the floor module 3.

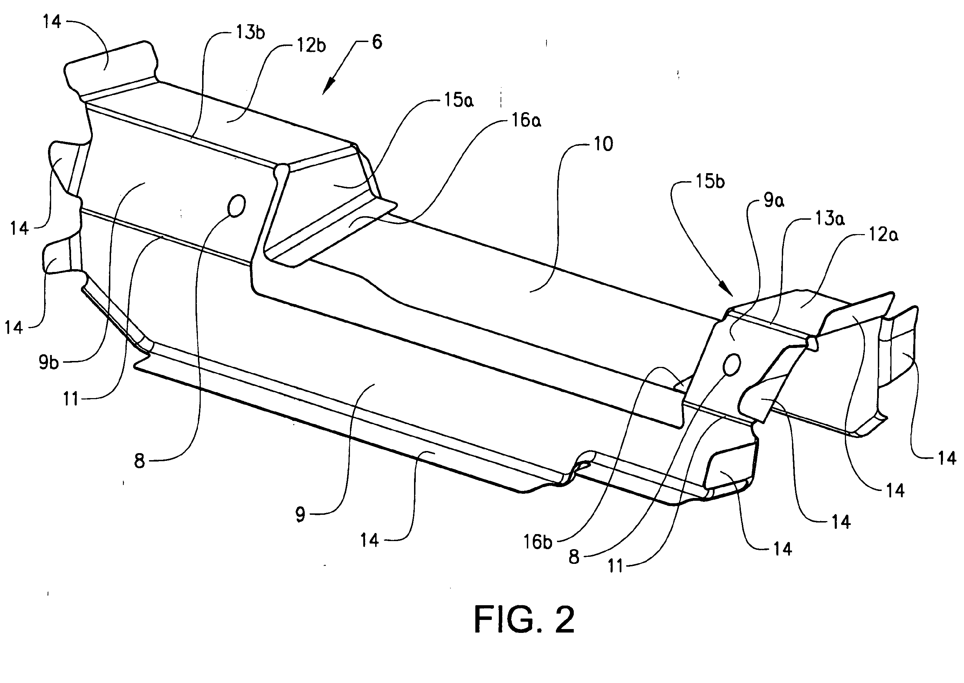

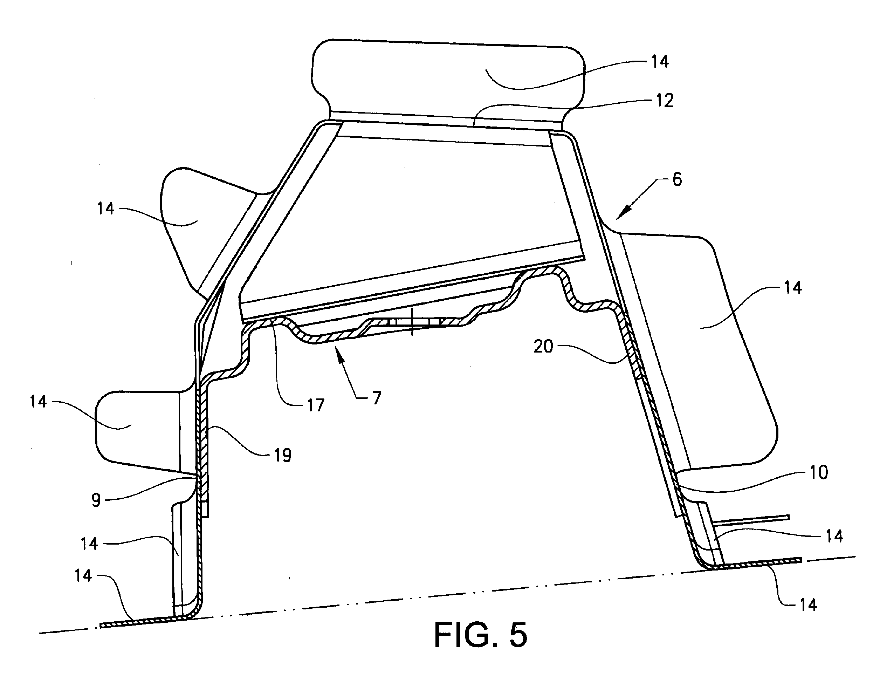

In fig 2 the supporting element 6 is shown in more detail. The words top, low etc. will in this description refer to directions relative to the intended orientation of the member in a vehicle. The supporting element 6 is made from a piece of sheet metal being folded at multiple lines to have an elongated shape with a roughly trapezium shaped cross-section, as seen in fig 5. The trapezium shape, with the short side up, gives a good stability to the supporting element. The supporting element 6 thus has two longitudinal side panels 9 and 10, the side panel 9 being folded at a blunt angle along a first folding line 11 in order to be adapted to fit a seat chassis (not shown). The two side panels 9 and 10 are united by a top panel 12, which is split in two top panel parts 12a and 12b, positioned at the opposite ends of the side panels 9 and 10, respectively. The split has been made by removing part of the sheet metal originally positioned between 12a and 12b, in a step in the manufacturing process. The reason for having a split top panel 12 will be given below. The top panel parts 12a and 12b connects along second folding lines 13a and 13b to corresponding side panel parts parts 9a and 9b of the side panel 9, which, as is also the case with the side panel 10 correspondingly, has a part of the sheet metal removed, suitably in the same manufacturing removal step as described above, between the side panel parts 9a and 9b corresponding in position lengthwise to the part removed from the top panel. Thus the parts removed in the manufacturing process together define a step of the supporting element the function of which will be described further down in the description. The supporting element 6 also is designed with welding tags 14 distributed along the lower rim of the side panels and at its outer end rims of side panel parts 9a and 9b and side panel 10. The welding tags 14 are of various shapes and are used for fixing the supporting element to the floor module and to the respective sill. At the end rims of the top panel parts 12a and 12b positioned against the centre of the supporting element a respective flap 15a and 15b are downfolded, the flaps having in turn a folded flap welding tag 16a and 16b at its lower end, respectively. The flap welding tags 16 are pointing in a direction against each other. The flap welding tags 16a and 16b are intended for the fixation of the body enforcing member 7 inside the supporting element 6 which will be described below.

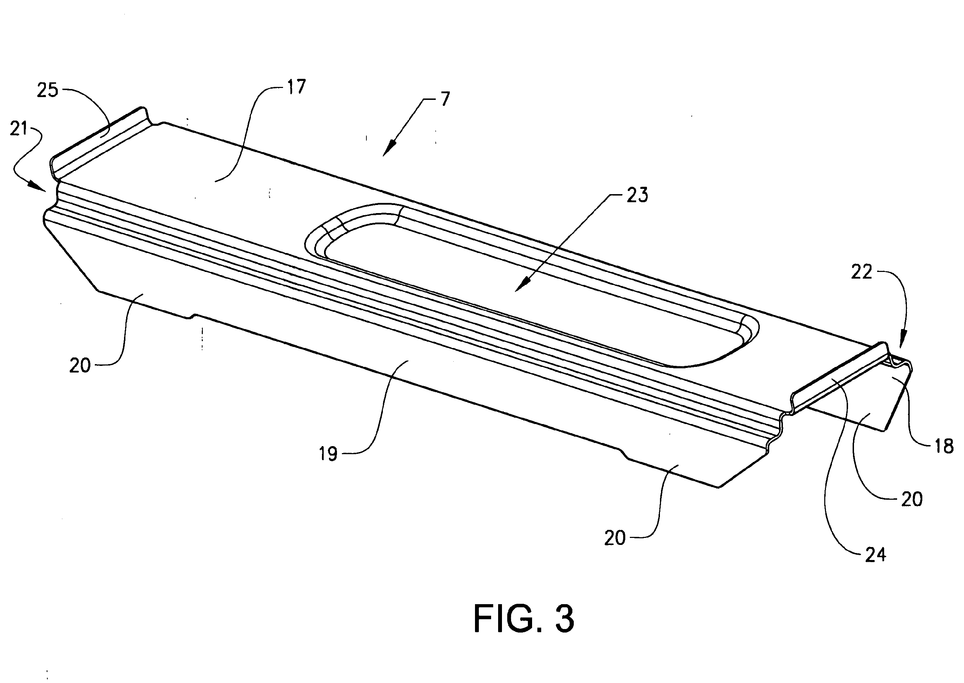

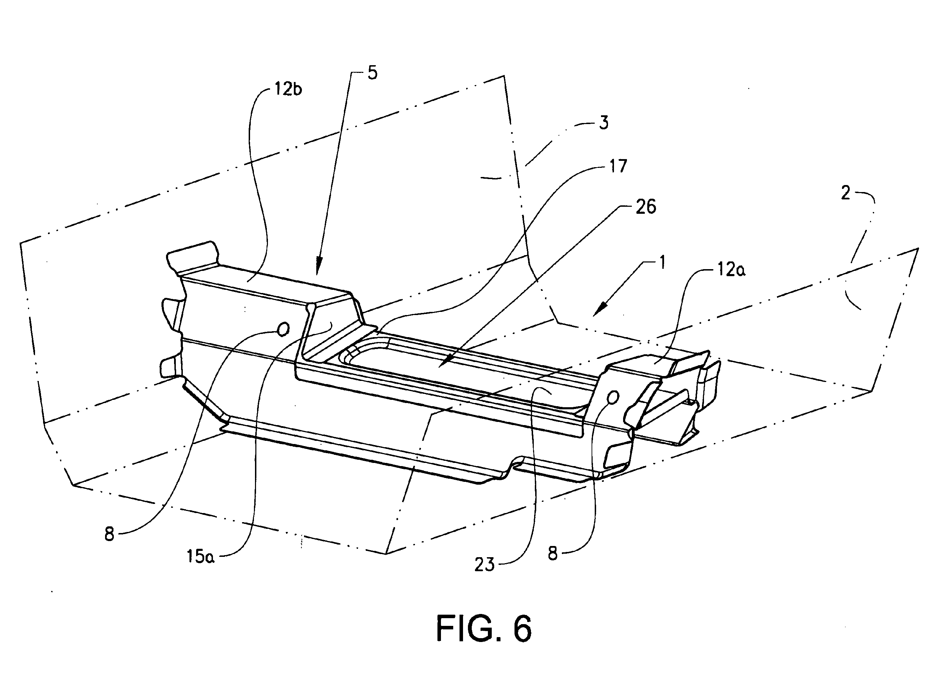

In fig 3 the vehicle enforcing element 7 is shown. The enforcing element is stamped and to some extent folded out of a flat sheet metal piece to have an elongated shape with a substantially trapezium shaped cross-section as is shown in fig 6. The trapezium shape, with the short side up, gives a good stability to the enforcing element and also makes it easy to fit inside the supporting element 6. The enforcing element thus has an enforcing top panel 17 and two enforcing side panels 18 and 19, which at their low rim 20 are somewhat extended at the respective end in order to enlarge the welding area. The top panel 17 and the side panels 18 and 19 are connected via a double-folded section 21 and 22, respectively, the double-folded sections 21 and 22 help in further stabilising the enforcing element. The top panel 17 is designed with a recess 23, which also helps in stabilising the enforcing element. At the remote ends of the enforcing element 7 upwardly angled flaps 24 and 25 are engaged in connection with the outer rims of the enforcing top panel 17. The flaps 24 and 25 increase the ability of the enforcing element 7 to transfer crash forces from the inner sill to the centre tunnel when the vehicle is in a crash situation.

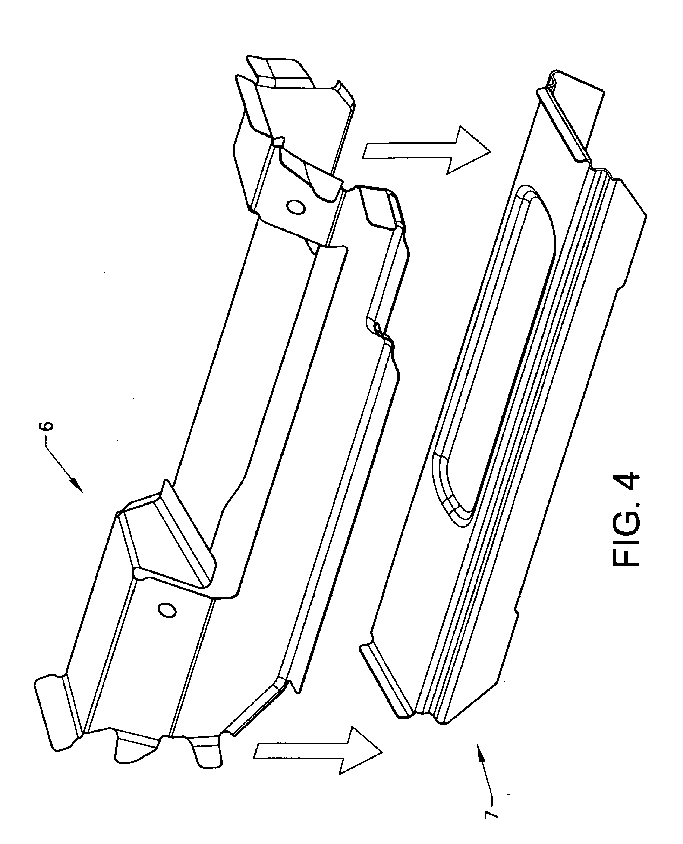

In fig 4 it is illustrated how the supporting element 6 and the enforcing element 7 are put together to form the vehicle body member 5. As shown, the supporting element 6 is entered on top of the enforcing element 7 to a position where the inside of the supporting element side panels 9 and 10 meet with the outside of the enforcing element side panels 18 and 19, as shown in fig 5, which is a cross-section view of the two elements put together. Then the supporting element 6 and the enforcing element 7 is spot welded together to form a unit, ready to place and fix on to the vehicle floor module, as is shown in fig 1 and fig 6, where the floor module, the inner sill and the centre tunnel are schematically shown. Spot-welding is preferably done on both sides, welding supporting element side panel 9 and enforcing element side panel 19 and supporting element side panel 10 and enforcing element side panel 18 together, respectively, and also the flap welding tags 16a and 16b are welded to the enforcing element 7 top panel 17.

In fig 5 a cross-section of the vehicle body member is shown. The enforcing element 7 is fixed inside the supporting member 6 by spot welding (spots not shown). The spots are made where the respective side panels 9,19 and 10,18 meet and also where the flap welding tags 16 meet the top panel 17 of the enforcing element.

As can be seen in the fig 5, the top panels 12a and 12b of the supporting element 7 is somewhat inclined compared to a fictitious line 21 drawn between the bottom rims of the supporting side panels 9 and 10, but the overall geometrics can be described as a trapezium cross-section, even if the side panel 9 is slightly folded. The reason for the inclination is that the top panel of the supporting element should be in line with the bottom of the seat chassis (not shown) to be able to have a good connection there between.

In fig 6 a more clear view of the vehicle body member than in fig 1 is shown. It can be seen that there is a stepped space 26 formed by part of the enforcing element top panel 17, above the recess 23 of the enforcing element 7, between the flaps 15a and 15b and under a top level defined by the supporting element top panel 12. This space can be used by rear seat passengers in the car for putting their feet while travelling in the car.

The invention herein explained is not limited to what has been described in connection with the example shown in the drawings. The shape of the supporting and the enforcing element is not limited to what has been shown e.g. the cross-section of the elements can be of another shape with curved panels or even stepped panels as long as the enforcing panel is adapted to fit for fastening inside the supporting panel. Also the welding tags could be designed in alternative ways without changing the invention behind. Also the step 26 on top of the vehicle body member can be modified to adapt to the seat chassis design, still leaving comfortable foot space. When designing the supporting element the sheet metal used to make it can be chosen concerning thickness bearing in mind that it is made in a folding process and does not have to carry crash impact loads, while the design of the enforcing element including choice of the type of metal and material thickness can be made bearing in mind that the enforcing element does not have to have the height to support the seat chassis but shall have high stiffness to be able to resist side impact collision forces. This makes it possible to have the enforcing element manufactured by a stamping process which enables the end product to have high stiffness.

## Claims

1. A vehicle body member (5) for supporting at least one seat or seat chassis positioned in the vehicle body and for resisting side impact collision forces, the vehicle body having a floor module (1) with a tunnel (2) and at least one side sill (3); a combination of a seat or seat chassis supporting element (6) and a vehicle body enforcing element (7), the elements (6,7) both being elongated and extending transverse to the longitudinal direction of the vehicle body under the at least one seat between the tunnel (2) and the at least one side sill, whereby the enforcing element (7) is arranged lengthwise inside the supporting element (6) and is carried in a fixed position by the supporting element, which in turn is fixed to the floor module (1), where the supporting element (6) has a cross-section essentially in the shape of a trapezium, and that the enforcing element (7) has a cross-section essentially in the shape of a trapezium whereby the outer dimensions of the enforcing element and the inner dimensions of the supporting element respectively are adapted for a spot-weldable contact when the enforcing element is in operable position on the inside of the supporting element, where the enforcing element (7) is lower than the supporting element (6) allowing a free foot space for passengers to be defined above the enforcing element (7) and below a top level defined by a top panel (12) of the supporting element (6), **characterised in that** the top panel (12a,b) of the supporting element (6) has an open part between two non-open end parts and that the side panels (9,10) of the supporting element have cut-out parts correspondingly positioned to the open part of the top panel (12a,b), thus allowing access to the free space between the supporting and the enforcing element (6,7).

2. A vehicle body member according to claim 1, **characterised in that** the supporting element (6) is manufactured from a sheet metal part which is folded to have the essentially trapezium shaped cross-section.

3. A vehicle body member according to any of the above claims 1 or 2, **characterised in that** the enforcing element (7) is stamped and then folded to its essentially trapezium shaped cross-section form.

4. A vehicle body member according to any of the above claims, **characterised in that** the supporting element (6) is equipped with tags suitable for spot welding to the vehicle body.

5. A floor module for a passenger vehicle, comprising at least one vehicle body member (5) according to any of the claims 1 to 4.

6. A passenger vehicle, comprising at least one body member (5) according to any of the claims 1 to 4.

## Patentansprüche

1. Fahrzeugkarosserieteil (5) zum Lagern von mindestens einem in einer Fahrzeugkarosserie angeordneten Sitz oder Sitzchassis und zum Widerstehen von Seitenaufprallkräften, die Fahrzeugkarosserie aufweisend ein Bodenmodul (1) mit einem Tunnel (2) und zumindest eine Seitenschwelle (3); eine Kombination aus einem Sitz- oder Sitzchassislagerelement (6) und einem Fahrzeugkarosserieverstärkungselement (7), wobei die Elemente (6, 7) beide länglich sind und sich quer zu der Längsrichtung der Fahrzeugkarosserie unter dem mindestens einen Sitz, zwischen dem Tunnel (2) und der mindestens einen Seitenschwelle, erstrecken, wodurch das Verstärkungselement (7) in Längsrichtung innerhalb des Lagerelements (6) angeordnet ist und in einer befestigten Position durch das Lagerelement getragen wird, das wiederum an dem Bodenmodul (1) befestigt ist, wo das Lagerelement (6) einen im Wesentlichen trapezförmigen Querschnitt aufweist und dass das Verstärkungselement (7) einen im Wesentlichen trapezförmigen Querschnitt aufweist, wodurch die äußeren Abmaße des Verstärkungselements und die inneren Abmaße des Lagerelements jeweils für einen punktschweißbaren Kontakt ausgelegt sind, wenn das Verstärkungselement in einer funktionsfähigen Position an der Innenseite des Lagerelements ist, wo das Verstärkungselement (7) niedriger ist als das Lagerelement (6), was die Definition eines Fußfreiraums für Passagiere über dem Verstärkungselement (7) und unter einem oberen Level, das durch eine obere Platte (12) des Lagerelements (6) definiert ist, ermöglicht,
**dadurch gekennzeichnet, dass** die obere Platte (12a, b) des Lagerelements (6) einen offenen Teil zwischen zwei nicht offenen Endteilen aufweist und dass die Seitenplatten (9, 10) des Lagerelements zu dem offenen Teil der oberen Platte (12a, b) entsprechend angeordnete Aussparungen aufweist, die somit den Zugang zu dem Freiraum zwischen dem Lager und dem Verstärkungselement (6, 7) zulassen.

2. Fahrzeugkarosserieteil gemäß Anspruch 1, **dadurch gekennzeichnet, dass** das Lagerteil (6) aus einem Metallblechteil hergestellt ist, das gefaltet ist, um den im Wesentlichen trapezförmigen Querschnitt aufzuweisen.

3. Fahrzeugkarosserieteil gemäß einem der vorstehenden Ansprüche 1 oder 2, **dadurch gekennzeichnet, dass** das Verstärkungselement (7) ausgestanzt ist und dann zu seiner im Wesentlichen trapezförmige Querschnittsform gefaltet wird.

4. Fahrzeugkarosserieteil gemäß einem der vorstehenden Ansprüche, **dadurch gekennzeichnet, dass** das Lagerelement (6) mit Fahnen ausgestattet ist, die zum Punktverschweißen mit der Fahrzeugkarosserie geeignet sind.

5. Bodenmodul für ein Personenfahrzeug, das mindestens ein Fahrzeugkarosserieteil (5) gemäß einem der Ansprüche 1 bis 4 aufweist.

6. Personenfahrzeug, das mindestens ein Karosserieteil (5) gemäß einem der Ansprüche 1 bis 4 aufweist.

## Revendications

1. Elément de carrosserie de véhicule (5) pour supporter au moins un siège ou châssis de siège positionné dans la carrosserie de véhicule et pour résister aux forces de collision d'impact latéral, la carrosserie de véhicule ayant un module de plancher (1) avec un tunnel (2) et au moins un seuil latéral (3) ; une combinaison composée d'un élément de support de siège ou de châssis de siège (6) et d'un élément de renforcement (7) de carrosserie de véhicule , les éléments (6, 7) étant tous deux allongés et s'étendant de manière transversale par rapport à la direction longitudinale de la carrosserie de véhicule sous le au moins un siège entre le tunnel (2) et le au moins un seuil latéral, moyennant quoi l'élément de renforcement (7) est agencé dans le sens de la longueur à l'intérieur de l'élément de support (6) et est supporté dans une position fixe par l'élément de support, qui est à son tour fixé au module de plancher (1), dans lequel l'élément de support (6) a une section transversale se présentant essentiellement sous la forme d'un trapèze, et l'élément de renforcement (7) a une section transversale se présentant essentiellement sous la forme d'un trapèze, moyennant quoi les dimensions externes de l'élément de renforcement et les dimensions internes de l'élément de support sont respectivement adaptées pour un contact pouvant être soudé par points lorsque l'élément de renforcement est dans une position opérationnelle sur l'intérieur de l'élément de support, dans lequel l'élément de renforcement (7) est inférieur à l'élément de support (6) permettant de définir un espace libre pour les pieds des passagers au-dessus de l'élément de renforcement (7) et au-dessous d'un niveau supérieur défini par un panneau supérieur (12) de l'élément de support (6),
**caractérisé en ce que** le panneau supérieur (12a, b) de l'élément de support (6) a une partie ouverte entre deux parties d'extrémité non ouvertes et **en ce que** les panneaux latéraux (9, 10) de l'élément de support ont des parties découpées positionnées de manière correspondante à la partie ouverte du panneau supérieur (12a, b), permettant ainsi l'accès à l'espace libre entre l'élément de support et l'élément de renforcement (6, 7).

2. Elément de carrosserie de véhicule selon la revendication 1, **caractérisé en ce que** l'élément de support (6) est fabriqué à partir d'une partie de tôle qui est pliée pour avoir la section transversale essentiellement en forme de trapèze.

3. Elément de carrosserie de véhicule selon l'une quelconque des revendications 1 ou 2 ci-dessus, **caractérisé en ce que** l'élément de renforcement (7) est estampé et ensuite plié selon sa forme de section transversale essentiellement en forme de trapèze.

4. Elément de carrosserie de véhicule selon l'une quelconque des revendications ci-dessus, **caractérisé en ce que** l'élément de support (6) est équipé avec des repères appropriés pour le soudage par points sur la carrosserie de véhicule.

5. Module de plancher pour un véhicule de passagers, comprenant au moins un élément de carrosserie de véhicule (5) selon l'une quelconque des revendications 1 à 4.

6. Véhicule de passagers comprenant au moins un élément de carrosserie (5) selon l'une quelconque des revendications 1 à 4.
